# EUROPEAN PATENT SPECIFICATION

(11) **EP 0 428 056 B1**
(45) Date of publication and mention of the grant of the patent: **26.01.1994**
(21) Application number: 90121334.8
(22) Date of filing: 07.11.1990
(51) Int. Cl.: B01J 3/02, C08F 10/00

(54) **A method and a device for feeding a catalytic slurry, especially a dilute catalytic slurry, into a polymerization reactor**
Verfahren und Apparat zum Beschichten eines Polymerisationsreaktors mit einem verdünnten Katalysatorschlamm
Procédé et dispositif pour introduire des catalyseurs dilués en forme de boue dans un réacteur de polymérisation

(30) Priority: 14.11.1989 FI 895422
(43) Date of publication of application: 22.05.1991
(73) Proprietor: NESTE OY, FIN-02150 Espoo (FI)
(72) Inventor: Ahvenainen, Antero, F-06150 Porvoo (FI); Andtsjö, Henrik, F-06150 Porvoo (FI); Sarantila, Kari, F-06400 Porvoo (FI); Mickos-Snickars, Tove, F-01150 Söderkulla (FI)
(74) Representative: Bühling, Gerhard, Dipl.-Chem.

(56) References cited:
- DE-A- 1 927 170
- DE-C- 974 175
- US-A- 3 227 312

## Description

The invention relates to a method for feeding a catalytic slurry, especially a dilute catalytic slurry, into a polymerization reactor, in which method the catalytic slurry is fed into one or more catalytic-slurry feeding containers, wherein the catalytic slurry is mixed in such a way that on the lower part of the feeding container is formed a mixture having the desired constant concentration, whereby said mixture is further fed from the feeding container under pressure into a batching space of a batching and feeding device, from which batching space the catalytic slurry is further uninterruptedly fed into the polymerization reactor by means of pressure of a medium fed by batches into said batching and feeding device, whereby after each catalytic slurry batch fed into polymerization reactor batching space of the batching and feeding device is essentially totally emptied of the medium by leading the medium via a medium discharge-channel out of the batching and feeding device before refilling the batching space with the catalytic slurry mixture.

The invention also relates to a device for feeding a catalytic slurry, especially a dilute catalytic slurry, by batches into a polymerization reactor from a catalytic-slurry feeding container as a continuous process, which device comprises a four-way valve provided with a rotatable plug, in which are formed cross-wise penetrating borings in such a way that a first boring and a second boring of the plug are not connected to each other, and on the frame of which device are formed cross-wise penetrating holes, the first hole being formed of a first feeding channel connecting the catalytic-slurry feeding line to the plug of the feeding device, which feeding channel on the opposite side continues as a first discharge channel out of the frame, the second hole being formed of a second feeding channel connected to the medium feeding-line, which feeding channel on the opposite side of the plug continues as a second discharge channel combined with a reactor line entering the polymerization reactor.

In several chemical reactions, as e.g. in the polymerization of certain hydrocarbon monomers, are used catalysts for advancing the chemical reaction. These reactions are very sensitive relative to the quantity of catalysts used in such a way that the production capacity of the reaction can be adjusted by controlling the quantity of the catalyst fed into the reactor. In such processes, the catalytic mixture is usually fed into a catalytic-slurry mixture container, in which the catalytic slurry is admixed in such a way that on the bottom of the container is formed the desired constant concentration, which is fed from the container by means of a pump via a feeding and batching device into to the polymerization reactor.

Since the processes of this type are continuous and uninterrupted, it must be possible to continuously batch the catalyst by the amount exactly desired into the polymerization reactor. This sets very great prerequisites and requirements for the operation and the operational reliability.

Such systems have previously been described e.g. in the US patents 3 167 398, 3 227 312, 4 155 488 and 4 690 804 as well as in the EP publication 25 137. However, several detrimental features are related to the solutions of these publications, and the present invention is intended to avoid these detrimental features. For example, in the solutions according to the US patents 3 167 398 and 4 563 665, a ball valve is used as a batching device for a catalytic mixture. The general problems related to ball valves are a possible leakage of the valve and the stucking of the valve ball. The construction of these valves is complex, due to which the fabrication of these valves is cumbersome. The same valve can usually be used only for feeding and batching a catalytic mixture of a certain type, and if for example the activity of the catalyst needed for the process has to be modified, the batching valve must be entirely changed. The problems of the other above-mentioned US patents are related to the removal of the medium needed for feeding the catalytic mixture from the batching device as well as the filling capacity of the batching device. It is, on the basis of the solutions according to these publications, thus very difficult to reach an accurate adjustment of the catalytic mixture. It is possible to reach a good batching adjustment of the catalytic mixture in accordance with the EP publication 25 137, but a disadvantage of this solution is yet the fact that during operation, the device requires a continuous flushing for reaching an accurate batching.

Another type of a feeding and batching device is disclosed in the DE-C 974 175, which shows a "pocket-feeder" in which a material to be fed into a pressurized reactor is intermittendly put into pockets of a batching device by charges. For feeding the material into the reactor, pressurized steam enters by a sharp injections flow into the pocket which expands strongly outwards. In this system, flushing is not effective since a great amount of the material to be fed will remain in the pocket.

Further, this known feeding/batching device has a drill hole leading to a discharge channel which is used as a blowoff outlet to let off the steam. If the medium is steam, it is easy to remove this medium because only a partial vacuum is needed for its removal. However, the problems associated with a feeding /batching device for a mud-like mixture are different and more severe than the problems associated with a feeding/batching device working with a steam medium.

The object of the present invention is to provide a method and a device, by means of which the disadvantages related to the publications of the described prior art are avoided. For achieving this object, the method in accordance with the invention is mainly characterized in that the catalytic slurry is continuously circulated via the batching and feeding device back into the feeding container.

The device in accordance with the invention is in part mainly characterized in that said first feeding channel continues on the opposite side of the plug after the discharge channel via the channel back into the feeding container and that on the frame of the feeding device is formed a third discharge channel between the borings cross-wise penetrating the frame, via which discharge channel a connection opens from the plug of the feeding device out of the frame of feeding device.

Several important advantages can be obtained by means of the invention, the advantages being e.g. as follows. By means of the method and the device according to the invention, a very accurate batching of the catalytic slurry can be achieved. This mainly results from the fact that the filling capacity of the valve used as a batching device is excellent, since during the process the medium is continuously removed from the batching device e.g. in such a way that the medium is allowed to evaporate out of the batching device via an additional channel formed in the device. In addition, the changing (dilution) of the concentration of the catalytic slurry can be prevented by removing the medium during the process. In the device according to the invention, there are very few wearing parts, owing to which the leaking of the device is eliminated and the device is extremely reliable in operation in such a way that the catalytic slurry can be very uniformly fed into the reactor. The batching device according to the invention can be adapted by means of very simple measures e.g. for feeding and batching catalytic slurries of a very different activity. The invention can especially well be adapted to be used for feeding such medium-catalyst combinations, whose density difference is small. The remaining advantages and special features of the invention are shown in a detailed description presented below.

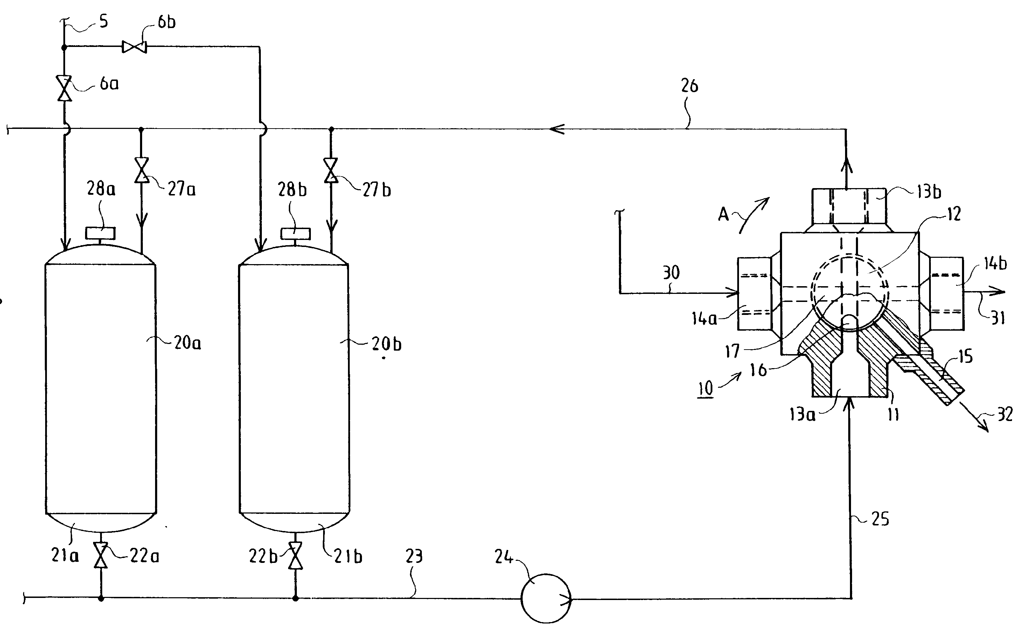

The invention is next illustrated in more detail with reference to the figure of the accompanying drawing, which figure is a schematic general view showing the catalytic-slurry mixing and feeding system according to the invention.

In accordance with the figure, the catalytic slurry is first fed from a feeding line 5 via valve elements 6a, 6b to catalytic-slurry feeding containers 20a, 20b provided with mixing devices 28a, 28b. The feeding line 5 comes e.g out of a catalyst container (not shown). In the figure of the drawing are drawn two parallel catalytic-slurry feeding containers 20a, 20b, but since the process operates continuously and uninterruptedly, the system can comprise several corresponding feeding containers. However, it is also apparent that the system can also be applied in connection with one feeding container only. By means of the mixing devices 28a, 28b of the feeding containers 20a, 20b, the catalytic slurry is mixed in these mixing containers 20a, 20b in such a way that a the desired constant concentration of the catalytic slurry is formed in a lower part 21a, 21b of the containers. From the catalytic-slurry mixing containers 20a, 20b, the slurry is led via valve elements 22a, 22b to a feeding line 23 leading to a catalytic-slurry circulation pump 24, which feeds the catalytic slurry along a feeding line 24 further into a batching and feeding device generally referred to by a reference number 10, which device feeds the catalytic slurry into the polymerization reactor. In the figure of the drawing, the batching and feeding device 10 is shown considerably in more detail and in a larger scale than the remaining part of the system according to the figure.

The catalytic slurry used in the system is a relatively dilute mixture, comprising small particles. The slurry can be e.g. chrome-based in such a way that the chrome is impregnated with the surface of the particles. Accordingly, said catalytic slurry is run from the catalytic-slurry feeding containers 20a, 20b to the batching and feeding device 10 by means of overpressure supplied by the circulation pump 24. In a way, the feeding device 10 itself comprises a four-way valve formed of a frame 11 of the feeding device and of a rotatable plug 12 fitted in the boring formed on the frame 11. In the frame 11 of the feeding device are formed penetrating and cross-wise borings in such a way that the first boring comprises a first feeding channel 13a combining the plug 12 of the batching and feeding device with the feeding line 25 coming from the circulation pump 24, as well as a first feeding channel coaxial with the first discharge channel 13b connected to a return line 26. The other boring in part comprises a second feeding channel 14a, to which is connected a medium feeding-line 30, as well as a second feeding channel 14b coaxially continuing with the second feeding channel 14a on the opposite side of the plug 12 of the batching and feeding device, which feeding channel 14b is connected to a reactor line 31 leading to the polymerization reactor. On the plug 12 of the batching and feeding device are in part formed cross-wise penetrating borings 16, 17, which are arranged on the plug 12 in such a way that the first boring 16 and the second boring 17 transversely extend through the plug 12 relative to the center axis of the plug 12, but are nevertheless not connected with each other. When the plug 12 is thus rotated on the frame 11 of the batching and feeding device in the rotational direction A, the borings 16, 17 formed on the plug 12 alternately, on one hand, connect with each other the first feeding channel 13a and the first discharge channel 13b and, on the other hand, the second feeding channel 14a and the second discharge channel 14b. The plug 12 is connected to a suitable actuator (not shown), by means of which the plug is continuously rotated during the process. Any conventional actuator can be used as an actuator.

When the process is in operation, the plug 12 is thus continuously rotated. The plug 12 must be adjusted by the rotational rate in such a way that the batching rate of the polymeric slurry into the polymerization is adjusted by controlling the rotational rate of the plug 12. In the figure of the drawing is shown a situation, wherein the plug 12 has rotated into a position, in which the first boring 16 in the plug 12 has turned to combine the first feeding channel 13a with the first discharge channel 13b. Similarly, the second boring 17 of the plug 12 is then in a position, in which it combines the feeding channel 14a with the second discharge channel 14b. Similarly, the second boring 17 of the plug is then in a position, wherein in connects the second feeding channel 14a to the second discharge channel 14b. In the position shown in the figure, the catalytic slurry thus flows from the catalytic-slurry feeding containers 20a, 20b by means of pressure supplied by the circulation pump 24 from the first feeding channel 13a to the first boring 16 of the plug 12, and further via the first discharge channel 13b into the return line 26, which is via the valve elements 27a, 27b connected back to the catalytic-slurry feeding chambers 27a, 27b. Similarly, in the situation shown in the figures, the medium is fed from the medium feeding-line 30 to the second feeding channel 14a of the batching and feeding device (10), from which feeding channel 14a it flows through the second boring 17 of the plug 12 to the second discharge channel 14b and further therefrom via a reactor line 31 to the polymerization reactor. The mediums typically used in such processes include e.g. propane, butane, hexane, pentane and the like. The catalytic slurry can in part be formed of a solid catalyst or of a prepolymerized catalyst. In the method according to the invention, the concentration of the catalytic slurry used is generally between 1-100 g/dm³. By means of suitable measures, the feeding of the medium into the batching and feeding device is arranged pressurized, and the feeding pressure of medium is in a suitable manner adapted to the feeding pressure of the catalytic slurry.

When, in the situation shown in the figure of the drawing, the plug 12 is rotated in the rotational direction A, the first and the second boring of the plug 12 are alternately connected to the first feeding channel 13a and the first discharge channel 13b of the batching and feeding device 10, and similarly to the second feeding channel 14a and the second discharge channel 14b. In a corresponding way, the connection of the borings 16 and 17 of the plug 12 to the channels of the batching and feeding device 10 is periodically interrupted. When the plug 12 starts rotating from the situation shown in the figure, the first boring 16 of the plug is filled with the catalytic slurry. When the plug 12 has rotated by 90°, a situation occurs, wherein the first boring 16 of the plug 12 connects the second feeding channel 14a of the batching and feeding device to the second discharge channel 14b, and correspondingly, the second boring 17 connects the first feeding channel 13a to the first discharge channel 13b. The medium fed into the second feeding channel 14a from the medium feeding-line 30 then runs the catalytic slurry in the first boring 16 with it into the polymerization reactor. Similarly, a new batch of the catalytic slurry then enters from the feeding line 25 the second boring 17 in the plug 12. When the plug 12 is continuously rotated, the feeding of the catalytic slurry into the polymerization reactor occurs continuously and uninterruptedly.

In previous solutions, when batching the catalytic slurry into the polymerization reactor, especially when dilute catalytic slurries are concerned, a considerable problem was formed by the fact that when the plug 12 rotates and the borings 16, 17 of the plug alternately hit at the first and feeding channel 13a and the first discharge channel, said boring was always full of the medium, which thus run with the catalytic slurry into the return line 26 and further into the catalytic-slurry feeding containers 20a, 20b. The medium mixed with the catalytic slurry in connection with the recirculation thus diluted the concentration of the catalytic slurry. Owing to this, in the previous methods, it has not been possible to utilize a corresponding recirculation for such medium catalyst combinations, whose density difference is small. In the solution according to the invention, this problem has been eliminated and solved in such a way that a third discharge channel 15 is formed between the second discharge channel 14b and the first feeding channel 13a in such a way that a connection opens via said third discharge channel from the plug 12 of the batching and feeding device out of the batching and feeding device 10. In contrast with the figure, the third discharge channel 15 can be arranged between the second feeding channel 14a and the first feeding channel 13b. Such an arrangement is very suitable e.g. for easily evaporable mediums.

Owing to said third discharge channel 15 is achieved an essential improvement in the operation of the batching and feeding device 10. When the plug 12 of the batching and feeding device 10 is turned from the position shown in the figure in the direction of the arrow A, the first boring 16 of the plug 12 is filled with the catalytic slurry and the second boring 17 is filled with a pressurized medium. When the plug 12 turns into a position, wherein the second boring 17 enters the third discharge channel 15, the medium can freely leave said second boring 17 via the third discharge channel 15. Since the typical mediums used easily evaporate, said medium immediately evaporates in the second boring 17, as said boring enters the third discharge channel 15, since an extremely rapid pressure drop occurs in the second boring 17. When the second boring 17 has thus turned past the third discharge channel 15, it is completely empty of the mediums, whereby, when said boring 17 enters the first feeding channel 13a, the catalytic slurry runs via said second boring 17 directly into the second return line 26 in such a way the slurry is not diluted, since no medium has remained in said boring. The third discharge channel 15 is suitably connected to the medium discharge-line 26, along which the gases are led e.g. to the incineration system, discharge container or the like of the plant.

The plug of the batching and feeding device does not have to be stopped, when one of the borings 16 or 17 is at said third discharge channel 15, but the medium has enough time to evaporate and leave when the plug 12 rotates. The removal of the medium via the third discharge channel 15 can be intensified e.g. in such a way that an underpressure is connected to said third discharge channel 15.

The batching frequency of the batching and feeding device 10, i.e. the rotational speed of the plug 12 is determined on the basis of the slurry concentration and is adjustable, as above has been mentioned. In the system according to the invention, the flowing rate of catalytic slurry achieved by means of the circulation pump 24 has to be maintained sufficiently high to prevent the catalytic slurry detrimentally from settling on the piping system. The pumping rate is typically maintained within 1-10 m/s. An additional advantage for the batching and feeding system 10 according to the invention is the fact that it is very simple by construction and that the plug 12 of the batching and feeding device 10 can easily be changed. Because of this, the batching and feeding device 10 can be provided with plugs 12 in such a way that the size of the borings located therein can be varied. The quantity of batching can thus also be adjusted in such a way that plugs 12 having borings 16, 17 of a different size are used in the feeding device 10.

The invention has above been described by way of example only with reference to the figures of the accompanying drawing. However, the invention is not only limited to concern the example shown in the figures, but various modifications are possible within the inventive idea defined in the patent claims.

## Claims

1. A method for feeding a catalytic slurry, especially a dilute catalytic slurry, into a polymerization reactor, in which method the catalytic slurry is fed into one or more catalytic-slurry feeding containers (20a, 20b) wherein the catalytic slurry is mixed in such a way that on the lower part (21a, 21b) of the feeding container (20a, 20b) is formed a mixture having the desired constant concentration, whereby said mixture is further fed from the feeding container (20a, 20b) under pressure into a batching space (16, 17) of a batching and feeding device (10), from which batching space the catalytic slurry is further uninterruptedly fed into the polymerization reactor by means of pressure of a medium fed by batches into said batching and feeding device (10), whereby after each catalytic slurry batch fed into the polymerization reactor, the batching space (16, 17) of the batching and feeding device (10) is essentially totally emptied of the medium by leading the medium via a medium discharge-channel (15) out of the batching and feeding device (10) before refilling the batching space (16, 17) with the catalytic slurry mixture, **characterized in that** the catalytic slurry is continuously circulated via the batching and feeding device (10) back into the feeding container (20a, 20b).

2. A method according to Claim 1, characterized in that the concentration of the catalytic slurry to be circulated is 1 - 100 /dm³.

3. A method according to Claim 1 or 2, characterized in that the catalytic slurry is circulated at a flowing rate of 1 - 10 m/s.

4. A method according to any of the preceding Claims, characterized in that the catalyst is formed of a solids catalyst or prepolymerized catalyst.

5. A method according to any of the preceding Claims, characterized in that the batching frequency of the batching and feeding device (10) is adjusted on the basis of the concentration of the catalytic slurry.

6. A device for realizing the method of any of the preceding Claims for feeding a catalytic slurry, especially a dilute catalytic slurry, by batches into the polymerization reactor from a container (20a, 20b) as a continuous process, which device (10) comprises a four-way valve provided with a rotatable plug (12), wherein are formed cross-wise penetrating borings in such a way that a first boring (16) and a second boring (17) are not connected with each other, and on the frame (11) of which device (10) are formed cross-wise penetrating holes,the first hole (13a, 13b) being formed of a first feeding channel (13a) connecting the catalytic-slurry feeding line (25) to the plug (12) of the feeding device (10), which feeding channel (13a) on the opposite side of the plug (12) continues as a first discharge channel (13b) out of the frame, and the second hole being formed of a second feeding channel (14a) connected to a medium feeding-line (30), which feeding channel (14a) on the opposite side of the plug (12) continues as a second discharge channel (14b), which is connected to a reactor line (31) entering the polymerization reactor, characterized in that said first feeding channel (13a) continues on the opposite side of the plug (12) after the first discharge channel (13a) via the channel (26) back into the feeding container (20a, 20b) and that on the frame (11) of the batching and feeding device (10) is formed between borings (13a, 13b; 14a, 14b) cross-wise penetrating the frame (11) a third discharge channel (15), via which a connection opens from the plug (12) of the feeding device out of the frame (11) of the feeding device.

7. A device according to Claim 6, characterized in that the third discharge channel (15) is formed on the frame (11) between the second discharge channel (14b) and the first feeding channel (13a).

8. A device according to Claim 6, characterized in that the third discharge channel (15) is formed on the frame (11) between the second discharge channel (14a) and the first feeding channel (13b).

## Patentansprüche

1. Verfahren zum Beschicken eines Polymerisationsreaktors mit einem Katalysatorschlamm, besonders mit einem verdünnten Katalysatorschlamm, wobei beim Verfahren der Katalysatorschlamm in einen oder mehrere Katalysatorschlamm-Beschickungsbehälter (20a, 20b) eingeleitet wird, in dem der Katalysatorschlamm in einer solche Weise gemischt wird, daß am unteren Teil (21a, 21b) des Beschickungsbehälters (20a, 20b) ein Gemisch ausgebildet wird, das die gewünschte konstante Konzentration hat, wobei das Gemisch weiter vom Beschickungsbehälter (20a, 20b) unter Druck in den Dosierraum (16, 17) einer Dosier- und Beschickungsvorrichtung (10) eingeleitet wird, von deren Dosierraum der Katalysatorschlamm weiter ununterbrochen in den Polymerisationsreaktor mit Hilfe von Druck eines Mediums eingeleitet wird, das durch Chargen der Dosier- und Beschickungsvorrichtung (10) zugeführt wurde, wobei, nachdem jede Katalysatorschlammcharge in den Polymerisationsreaktor eingeleitet wurde, der Dosierraum (16, 17) der Dosier- und Beschickungsvorrichtung (10) im wesentlichen völlig vom Medium entleert wurde, indem das Medium über einen Medium-Auslaßkanal (15) aus der Dosier- und Beschickungsvorrichtung (10) heraus ausgelassen wurde, bevor der Dosierraum (16, 17) mit dem Katalysatorschlammgemisch wieder aufgefüllt wird,
dadurch gekennzeichnet, daß
der Katalysatorschlamm kontinuierlich über die Dosierund Beschickungsvorrichtung (10) zurück in den Beschickungsbehälter (20a, 20b) umgeführt wird.

2. Verfahren nach Anspruch 1, dadurch gekennzeichnet, daß die Konzentration des umzuführenden Katalysatorschlamms 1-100 /dm³ beträgt.

3. Verfahren nach Anspruch 1 oder 2, dadurch gekennzeichnet, daß der Katalysatorschlamm mit einer Strömungsgeschwindigkeit von 1-10 m/s umgeführt wird.

4. Verfahren nach einem der vorherigen Ansprüche, dadurch gekennzeichnet, daß der Katalysator aus einem festen Katalysator oder einem vorpolymerisierten Katalysator ausgebildet ist.

5. Verfahren nach einem der vorherigen Ansprüche, dadurch gekennzeichnet, daß die Dosierfrequenz der Dosier- und Beschickungsvorrichtung (10) auf Grund der Konzentration des Katalysatorschlamms eingestellt wird.

6. Vorrichtung zum Umsetzen des Verfahrens nach einem der vorherigen Ansprüche, um einen Katalysatorschlamm, besonders einen verdünnten Katalysatorschlamm, in einen Polymerisationsreaktor durch Chargen als ein kontinuierlicher Prozeß von einem Behälter (20a, 20b) einzuleiten, wobei die Vorrichtung (10) ein Vier-Wegeventil aufweist, das mit einem drehbaren Küken (12) versehen ist, in dem kreuzweise, durchdringende Bohrungen in einer solchen Weise ausgebildet sind, daß eine erste Bohrung (16) und eine zweite Bohrung (17) nicht miteinander verbunden sind, und auf dem Rahmen (11) der Vorrichtung (10) kreuzweise, durchdringende Ausnehmungen ausgebildet sind, wobei die erste Ausnehmung (13a, 13b) von einem ersten Beschickungskanal (13a) gebildet wird, der die Katalysatorschlamm-Beschickungsleitung (25) mit dem Küken (12) der Beschickungsvorrichtung (10) verbindet, wobei der Beschickungskanal (13a) auf der entgegengesetzten Seite des Kükens (12) als ein erster Auslaßkanal (13b) aus dem Rahmen heraus weiter verläuft, und wobei die zweite Ausnehmung von einem zweiten Beschickungskanal (14a) gebildet wird, der mit einer Medium-Beschickungs-Leitung (30) verbunden ist, wobei der Beschickungskanal (14a) auf der entgegengesetzten Seite des Kükens (12) als ein zweiter Auslaßkanal (14b) weiterführt, der mit einer Reaktorleitung (31) verbunden ist, die in den Polymerisationsreaktor eintritt,
dadurch gekennzeichnet, daß
der erste Beschickungskanal (13a) auf der entgegengesetzten Seite des Kükens (12) nach dem ersten Beschickungskanal (13a) über den Kanal (26) zurück in den Beschickungsbehälter (20a, 20b) weiterführt, und daß
ein dritter Kanal (15) auf dem Rahmen (11) der Dosierund Beschickungsvorrichtung (10) zwischen den kreuzweise den Rahmen (11) durchdringenden Bohrungen (13a, 13b; 14a, 14b) ausgebildet ist, über den sich eine Verbindung vom Küken (12) der Beschickungsvorrichtung aus dem Rahmen (11) der Beschickungsvorrichtung heraus öffnet.

7. Vorrichtung nach Anspruch 6, dadurch gekennzeichnet, daß der dritte Auslaßkanal (15) auf dem Rahmen (11) zwischen dem zweiten Auslaßkanal (14b) und dem ersten Beschickungskanal (13a) ausgebildet ist.

8. Vorrichtung nach Anspruch 6, dadurch gekennzeichnet, daß der dritte Auslaßkanal (15) auf dem Rahmen (11) zwischen dem zweiten Auslaßkanal (14a) und dem ersten Beschickungskanal (13b) ausgebildet ist.

## Revendications

1. Procédé pour l'alimentation d'une boue catalytique, notamment d'une boue catalytique diluée, dans un réacteur de polymérisation, procédé dans lequel la boue catalytique est alimentée dans un ou plusieurs réservoirs d'alimentation de boue catalytique (20a, 20b) dans lesquels la boue catalytique est mélangée de façon à former sur la partie inférieure (21a, 21b) du réservoir d'alimentation (20a, 20b) un mélange ayant la concentration constante souhaitée, ce mélange étant de plus fourni par le réservoir d'alimentation (20a, 20b) sous pression dans un espace de dosage (16, 17) d'un dispositif de dosage et d'alimentation (10), espace de dosage à partir duquel la boue catalytique est de plus alimentée de façon ininterrompue dans le réacteur de polymérisation au moyen de la pression d'un fluide amené par lots dans le dispositif d'alimentation et de dosage (10), après quoi chaque lot de boue catalytique étant alimenté dans le réacteur de polymérisation, l'espace de dosage (16, 17) du dispositif de dosage et d'alimentation (10) étant essentiellement complètement vidé du fluide en amenant celui-ci par un canal d'évacuation de fluide (15) en dehors du dispositif de dosage et d'évacuation (10) avant le remplissage de l'espace de dosage (16, 17) avec le mélange de boue catalytique, caractérisé en ce que la boue catalytique est mise en circulation en continu par l'intermédiaire du dispositif de dosage et d'alimentation (10) en retour dans le réservoir d'alimentation (20a, 20b).

2. Procédé selon la revendication 1, caractérisé en ce que la concentration de la boue catalytique à mettre en circulation est de 1 - 100/dm³.

3. Procédé selon la revendication 1 ou 2, caractérisé en ce que la boue catalytique est mise en circulation à un débit de 1 - 10 m/s.

4. Procédé selon l'une quelconque des revendications précédentes, caractérisé en ce que le catalyseur est constitué par un catalyseur solide ou un catalyseur prépolymérisé.

5. Procédé selon l'une quelconque des revendications précédentes, caractérisé en ce que la fréquence de dosage du dispositif de dosage et d'alimentation (10) est ajustée en fonction de la concentration de la boue catalytique.

6. Dispositif destiné à réaliser le procédé selon l'une quelconque des revendications précédentes, pour l'alimentation d'une boue catalytique, notamment d'une boue catalytique diluée, par lots dans le réacteur de polymérisation à partir d'un réservoir (20a, 20b) sous forme de procédé continu, lequel dispositif (10) comprend une vanne à quatre voies munie d'un bouchon rotatif (12), dans lequel sont formés des alésages de pénétration transversaux de telle sorte qu'un premier alésage (16) et un second alésage (17) ne sont pas raccordés entre eux, et sur le châssis (11) duquel dispositif (10) sont pratiqués des trous de pénétration transversaux, le premier trou (13a, 13b) étant constitué par un premier canal d'alimentation (13a) raccordant la conduite d'alimentation de boue catalytique (25) au bouchon (12) du dispositif d'alimentation (10), lequel canal d'alimentation (13a) sur le côté opposé du bouchon (12) se poursuit sous forme de premier canal d'évacuation (13b) hors du châssis, et le second trou étant constitué par un second canal d'alimentation (14a) raccordé à une conduite d'alimentation de fluide (30), lequel canal d'alimentation (14a) sur le côté opposé du bouchon (12) se poursuit sous forme de second canal d'évacuation (14b), lequel est raccordé à une conduite de réacteur (31) pénétrant dans le réacteur de polymérisation, caractérisé en ce que le premier canal d'alimentation (13a) se poursuit sur le côté opposé du bouchon (12) après le premier canal d'évacuation (13a) par l'intermédiaire du canal (26) en retour dans le réservoir d'alimentation (20a, 20b) et en ce que sur le châssis (11) du dispositif de dosage et d'alimentation (10) est formé entre les alésages (13a, 13b ; 14a, 14b), un troisième canal d'évacuation (15) pénétrant transversalement dans le châssis (11), canal par lequel s'ouvre un raccordement à partir du bouchon (12) du dispositif d'alimentation en dehors du châssis (11) du dispositif d'alimentation.

7. Dispositif selon la revendication 6, caractérisé en ce que le troisième canal d'évacuation (15) est formé sur le châssis (11) entre le second canal d'évacuation (14b) et le premier canal d'alimentation (13a).

8. Dispositif selon la revendication 6, caractérisé en ce que le troisième canal d'évacuation (15) est formé sur le châssis (11) entre le second canal d'évacuation (14a) et le premier canal d'alimentation (13b).
